# EUROPEAN PATENT APPLICATION

(11) **EP 4 541 666 A1**
(43) Date of publication of application: **23.04.2025**
(21) Application number: 23204969.2
(22) Date of filing: 20.10.2023
(51) Int. Cl.: B60R 19/34

(54) **CRASH MANAGEMENT SYSTEM FOR A VEHICLE**

(71) Applicant: Constellium Singen GmbH, 78224 Singen (DE)
(72) Inventor: SCHMID, Thomas, 78315 RADOLFZELL (DE); FRITZ, Klaus, 78315 RADOLFZELL (DE); GREILICH, Alexander, 78224 SINGEN (DE)
(74) Representative: Constellium - Propriété Industrielle

(57) **Abstract**

The invention relates to a crash management system (100) for a vehicle front or a vehicle rear of a motor vehicle, the vehicle front or the vehicle rear having a longitudinal direction (X), a transverse direction (Y) extending perpendicular to the longitudinal direction (X) and a vertical direction (Z) extending perpendicular to a plane spanned by the longitudinal direction (X) and the transverse direction (Y), wherein the crash management system (100) includes a cross member (10) extending substantially along the transverse direction (Y), the cross member (10) having a closed cross-section with an outer flange (12), an inner flange (14) and two cross flanges (16, 18) connecting the outer flange (12) to the inner flange (14), the cross member (10) being attachable to a vehicle structure (1) by means of two crash boxes (25) connected at a distance (a) from one another and connected to the inner flange (14), and having at least one reinforcing element (35; 35a; 35b) arranged, if viewed in the transverse direction (Y), on an opposite side of the crash boxes (20).

## Description

### TECHNICAL FIELD OF THE INVENTION

The invention relates to a crash management system for a vehicle front or rear end of a motor vehicle, which enables particularly advantageous crash characteristics, especially in electric vehicles, in connection with a so-called "pole test", in which a collision with a pole-like obstacle takes place in the central area of the cross member between the two crash boxes.

### BACKGROUND

A crash management system is known from DE 10 2016 222 013 B4, in which the crash box is connected to the vehicle structure in the area of the longitudinal members by additional, strip-shaped or angular reinforcing elements. The reinforcing elements are designed as separate elements and are welded on the one hand to a side wall of a crash box and on the other hand to a flange plate for connecting the crash box to a longitudinal member of the vehicle structure.

A crash management system is known from EP 2 979 932 A1, in which the crash boxes, on the side facing the cross member, are inserted with a front end section of the crash box into the cross-section of the cross member, which has a substantially U-shaped cross-section, wherein tab-shaped sections are bent or angled off from the front end section of the crash box and are connected to the cross member.

### SUMMARY OF THE INVENTION

The crash management system according to the invention for a vehicle front or a vehicle rear of a motor vehicle having the features of claim 1 has the advantage that the at least one reinforcing element is designed or arranged in such a way that in the case of a so-called pole test, in which the vehicle collides with a pole-shaped obstacle between the two crash boxes, the structure in the region of the crash boxes is retained as long as possible or separation of the cross member from the crash box is made more difficult or is prevented.

In this so-called pole test, the crash box is subjected to strong bending stress, causing it to buckle. The buckling results in a high tensile load on the outside of the crash box, which causes the material to fail, i.e. the crash box to tear off. The reinforcing element according to the invention now forms a tensile connection from the cross member to the crash box. The reinforcing element according to the invention now acts as a tension belt that relieves the crash box on the outside that is subjected to high tensile loads and prevents material failure on the outside, i.e. tearing off of the crash box. Due to its pure function as a tension belt, there is also no negative effect of the at least one reinforcing element on the function of the crash box in other load cases where the crash box dissipates energy by axial folding. In addition, the crash management system according to the invention allows a particularly simple manufacturing of the at least one reinforcing element provided or its implementation without any additional components, since this is not a separate component but is formed by a recessed subsection of the cross member angled towards the crash box.

Against the background of the above explanations, it is therefore provided in a crash management system according to the invention for a vehicle front or a vehicle rear of a motor vehicle having the features of claim 1, that the vehicle front or the vehicle rear has a longitudinal direction X, a transverse direction Y extending perpendicularly to the longitudinal direction and a vertical direction Z extending perpendicularly to a plane spanned by the longitudinal direction X and the transverse direction Y. Furthermore, the crash management system according to the invention includes a cross member that extends substantially along the transverse direction Y, the cross member having a closed cross-section with an outer flange, an inner flange, and two cross flanges connecting the outer flange to the inner flange. In addition, the cross member is attachable to a vehicle structure by means of two crash boxes spaced apart from each other and connected to the inner flange of the cross member, and has at least one reinforcing element arranged on an opposite side of the crash boxes, as viewed in the transverse direction. The at least one reinforcing element is formed by severing at least a section of the inner flange of the cross member and is arranged angled in the direction of a side wall of the crash box, the at least one reinforcing element being connected to the side wall of the crash box.

Advantageous further embodiments of the crash management system according to the invention are listed in the subclaims.

The attachment of the at least one reinforcing element to the side wall of the crash box can be implemented in different ways. In a first embodiment of the attachment, it is provided that the at least one reinforcing element is connected to the side wall of the crash box by means of a welded joint. Such a welded joint may comprise welded seams or spot welded joints, with it being preferably provided that the welded joint in case of welded seams is arranged along at least a part of the outer contour of the at least one reinforcing element. By means of such welded joints, forces introduced by the connecting element into the crash box can be transferred relatively uniformly or homogeneously.

In an alternative embodiment of the connection between the at least one reinforcing element and the side wall of the crash box, it is provided that the at least one reinforcing element is connected to the side wall of the crash box by at least one screw connection. Screw connections have, in particular, the advantage that the reinforcing element and the crash box can consist of different materials in the connection region that cannot be welded to one another.

The connection between the crash boxes and the cross member is made in the areas where no reinforcing element is provided, on the side facing the cross member, as a result of the fact that the crash boxes are welded to the inner flange of the cross member. A welded joint of this kind provides a particularly secure and reliable connection between the crash boxes and the cross member, as loads are uniformly introduced into the connection area between the cross member and the crash box.

Different designs are also conceivable with regard to the shape of the at least one reinforcing element. It is in particular provided that the at least one reinforcing element is rectangular, trapezoidal or triangular in shape.

In order to minimize the tensile loads in the at least one reinforcing element or to enable the highest possible strength in the connection area between the at least one reinforcing element and the side wall of the crash box, it is preferably provided that the at least one reinforcing element extends at least as far as the cross flanges of the cross member. As a result, the maximum possible size or length of the reinforcing element is achieved when viewed in the vertical direction Z, which results in relatively long weld seams with a correspondingly low (tensile) load in the weld seam in the event of a crash, particularly in the case of a welded joint. It is quite conceivable for the inner flange of the cross member to extend in the vertical direction beyond the cross flanges on one or both sides, in which case these areas can also form part of the reinforcing element.

Another constructional design of the crash management system is characterized in that the cross member is designed as a multi-chamber profile with at least one partition wall connecting the outer flange to the inner flange between the two cross flanges, and either one reinforcing element is provided which extends at least between the two cross flanges of the cross member, or two reinforcing elements are provided which each extend between the partition wall and at least the cross flanges of the cross member.

Optimization or maximization of the size of the at least one reinforcing element is achieved by recessing the inner flange of the cross member to form the at least one reinforcing element up to an outer edge of the cross member.

In one embodiment, it is preferably provided that the at least one reinforcing element has a length I which corresponds to the length L of the recessed section of the inner flange up to the outer edge of the cross member. As a result, the severed or recessed section of the inner flange does not have to be reduced in length by a further machining step.

In another embodiment, it is preferably provided that the at least one reinforcing element has a length I which is smaller than the distance from the crash box to the inner flange of the outer edge of the cross member.

In particular in the case of cross members that still extend over a relatively large area in the transverse direction on the side facing away from the crash boxes, it may alternatively also be provided that the inner flange of the cross member is recessed to a distance b from an outer edge of the cross member in order to form the at least one reinforcing element, so that a web of the inner flange is formed from the area of the recess for the at least one reinforcing element to the outer edge of the cross member.

Preferably, the cross member is made of aluminum or an aluminum alloy and is manufactured in the form of an extruded component.

Likewise, the crash boxes are also preferably made of aluminum or an aluminum alloy. In particular in connection with the formation of weld seams, this allows a simple attachment of the crash boxes to the cross member and of the at least one reinforcing element to the crash box.

Typically, it is further provided that at least two reinforcing elements are provided, which are arranged on opposite sides of the crash boxes.

Further advantages, features and details of the invention will be apparent from the following description of preferred embodiments of the invention and from the drawings.

### BRIEF DESCRIPTION OF THE DRAWINGS

Fig. 1 shows a simplified illustration of the essential components of a crash management system for a motor vehicle, and
Fig. 2 to Fig. 4 each show perspective views of a subsection of the crash management system of Fig. 1 with differently designed reinforcing elements.

### DETAILED DESCRIPTION

Identical elements or elements with the same function have been provided with the same reference numbers in the figures.

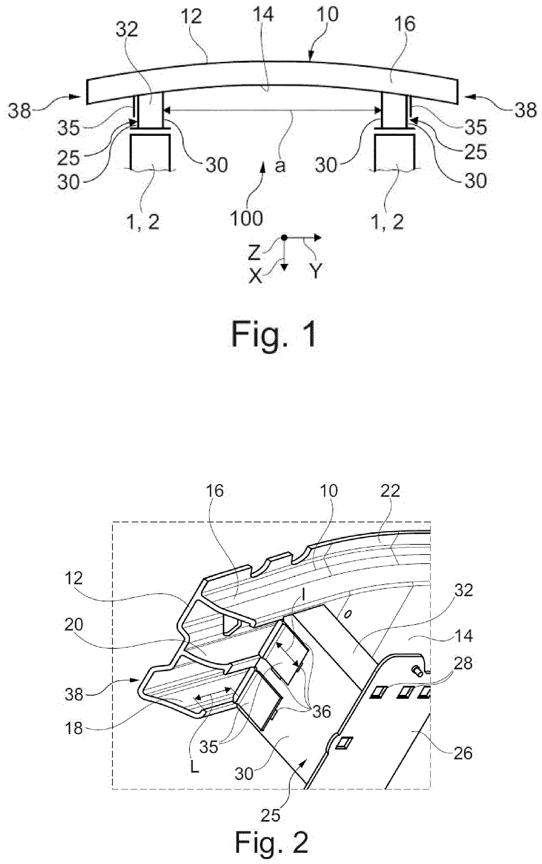

Fig. 1 shows the essential components of a crash management system 100 for a motor vehicle. The crash management system 100 can be arranged both at the vehicle front and the vehicle rear of the motor vehicle, with it being assumed in the following that the crash management system 100 is arranged in the region of the vehicle front. The motor vehicle is furthermore preferably an electrically driven motor vehicle.

As shown in Fig. 1, the vehicle front has a longitudinal direction X, a transverse direction Y extending perpendicular to the longitudinal direction X, and a vertical direction Z extending perpendicular to a plane spanned by the longitudinal direction X and the transverse direction Y and perpendicular to the drawing plane of Fig. 1.

The crash management system 100 comprises a cross member 10, which is preferably, but without being limited thereto, made of aluminum or an aluminum alloy and is formed as an extrusion component. The cross member 10, which extends substantially in the transverse direction Y, may furthermore be curved in regions, as is known per se from the prior art.

The cross member 10 preferably has a closed cross-section with an outer flange 12, an inner flange 14 running parallel to the outer flange 12, and two cross flanges 16, 18 (only visible in figures 2 to 4) connecting the outer flange 12 to the inner flange 14 and arranged parallel to each other and perpendicular to the outer flange 12 and the inner flange 14, so that the cross member 10 has an at least substantially rectangular cross-section.

In the illustrated embodiment examples of figures 2 to 4, a partition wall 20 is further provided within the cross-section of the cross member 10 parallel to the cross flanges 16, 18 and extending between the outer flange 12 and the inner flange 14, so that the cross-section of the cross member 10 is formed as a 2-chambers profile.

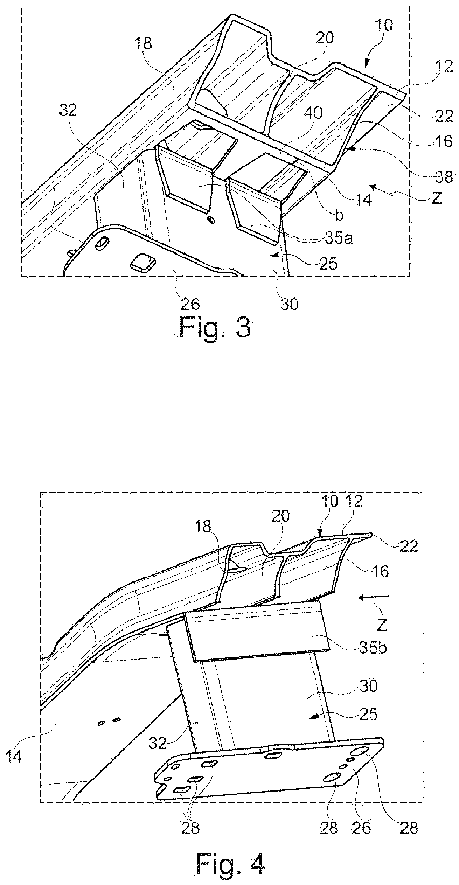

In addition, it is explained that the cross-section of the cross member 10, e.g. in the region of its inner flange 14, as viewed in the vertical direction Z, can also be designed to extend beyond the two cross flanges 16, 18, as is shown in a similar manner for the outer flange 12 at a flange section 22 (upper flange on Fig. 2 and lower flange on figure 3 and 4).

The cross member 10 is attached to a vehicle structure 1 by means of two crash boxes 25 spaced apart by a distance a. The vehicle structure 1 has longitudinal members 2, in particular in the area of the attachment points of the two crash boxes 25. In the illustrated embodiment example, the two crash boxes 25 are attached to the vehicle structure 1 or the longitudinal members 2 via flange plates 26, which are connected to the crash boxes 25 on the side facing away from the cross member 10, in particular by welded connections (not shown). The flange plates 26 have holes 28 via which the flange plates 26 and thus the crash boxes 25 can be screwed to the longitudinal members 2.

It is additionally mentioned that the attachment of the two crash boxes 25 to the vehicle structure 1 or the longitudinal members 2 can also be carried out in a different way than via the flange plates 26, for example by inserting the crash boxes 25 into the inner cross-section of the longitudinal members 2 and screwing them to the longitudinal members 2.

The two crash boxes 25 are preferably also made of aluminum or an aluminum alloy and, in the embodiment shown, have a rectangular cross-section with two first side walls 30 arranged parallel to one another and two second side walls 32 likewise arranged parallel to one another and at right angles to the first side walls 30. The crash boxes 25 are preferably attached to the cross member 10 by welded connections (not shown) in the region of the inner flange 14.

To reinforce the crash boxes 25 running essentially in the longitudinal direction X to improve the crash behavior, in particular in a so-called pole test, at least one reinforcing element 35 is provided in the region of at least one of the two crash boxes 25, preferably on both crash boxes 25, as shown in Fig. 2.

In a case where both crash boxes 25 each comprise a reinforcing element 35, the at least two reinforcing elements 35 are arranged on opposite sides of the two crash boxes 25 of the first side walls 30. In a case where only one of the two crash boxes 25 has a reinforcing element 35, this reinforcing element 35 is arranged on the respective crash box 25 on the side facing away from the other crash box 25 on a first side wall 30.

The at least one reinforcing element 35 is formed by severing a section of the inner flange 14 from the cross member 10. The severing or cutting can be done, for example, by sawing or milling. Subsequently, the at least one reinforcing element 25 is bent over in the direction of the (outer) first side wall 30 and brought into abutting contact with the first side wall 30 of the crash box 25.

In the embodiment example shown in Fig. 2, two reinforcing elements 35, each rectangular in shape, are connected to the crash box 25, each of the two reinforcing elements 35 extending between the partition wall 20 and the respective cross flange 16, 18. In particular, the two reinforcing elements 35 extend as close as possible to the respective cross flange 16, 18 or to the partition wall 20.

The connection between the reinforcing elements 35 and the first side wall 30 of the crash box 25 is preferably made by a welded connection, the welded connection comprising, for example, at least one weld seam 36, which is formed as a fillet weld on the outer contour of the respective reinforcing element 35 with respect to the first side wall 30. Alternatively, however, spot welded joints or screwed joints can also enable a connection between the two reinforcing elements 35 and the first side wall 30 of the crash box 25.

In the embodiment example shown in Fig. 2, the two reinforcing elements 35 each have a length I that corresponds to the length L of the inner flange 14 up to the end side 38 of the cross member 10.

In the embodiment example shown in Fig. 3, the two reinforcing elements 35a are each essentially trapezoidal in shape and do not extend as far as the outer edge 38 of the cross member 10, but end at a distance b from the outer edge 38, so that a web 40 extending in the vertical direction Z remains in the region of the outer edge 38.

Lastly, as shown in Fig. 4, when a single reinforcing element 35b is used, it extends beyond the two cross flanges 16, 18 in the vertical direction Z, since the inner flange 14 is extended on both sides in the vertical direction Z. As a result, additional severing of the connection between the inner flange 14 and the partition wall 20 and the cross flanges 16, 18 is required.

The crash management system 100 described thus far can be modified or altered in a variety of ways without departing from the essence of the invention.

### List of reference

- 1: Vehicle structure
- 2: Longitudinal member
- 10: Cross member
- 12: Outer flange
- 14: Inner flange
- 16: Cross flange
- 18: Cross flange
- 20: Partition wall
- 22: Flange section
- 25: Crash box
- 26: Flange plate
- 28: Hole
- 30: First side wall
- 32: Second side wall
- 35: Reinforcing element
- 35a,b: Reinforcing element
- 36: Weld seam
- 38: Outer edge
- 40: Web
- 100: Crash management system

- a, b: Distance
- L, I: Length
- X: Longitudinal direction
- Y: Transverse direction
- Z: Vertical direction

## Claims

1. Crash management system (100) for a vehicle front or a vehicle rear of a motor vehicle, the vehicle front or the vehicle rear having a longitudinal direction (X), a transverse direction (Y) running perpendicular to the longitudinal direction (X) and a vertical direction (Z) running perpendicular to a plane spanned by the longitudinal direction (X) and the transverse direction (Y), the crash management system (100) including a cross member (10) that extends essentially along the transverse direction (Y), the cross member (10) having a closed cross-section with an outer flange (12), an inner flange (14) and two cross flanges (16, 18) connecting the outer flange (12) to the inner flange (14), the cross member (10) being attachable to a vehicle structure (1) by means of two crash boxes (25) connected at a distance (a) from one another and connected to the inner flange (14), and having at least one reinforcing element (35; 35a; 35b) arranged, if viewed in the transverse direction (Y), on an opposite side of the crash boxes (20), wherein the at least one reinforcing element (35; 35a; 35b) is formed by severing at least a section of the inner flange (14) of the cross member (10) and is arranged angled in the direction of a side wall (30) of the crash box (25), and wherein the at least one reinforcing element (35; 35a; 35b) is connected to the side wall (30) of the crash box (25).

2. Crash management system according to claim 1,
**characterized in that** the at least one reinforcing element (35; 35a; 35b) is connected to the side wall (30) of the crash box (25) by means of a welded joint (36).

3. Crash management system according to claim 2,
**characterized in that** the welded joint (36) is arranged along at least part of the outer contour of the at least one reinforcing element (35; 35a; 35b).

4. Crash management system according to claim 1,
**characterized in that** the at least one reinforcing element (35; 35a; 35b) is connected to the side wall (30) of the crash box (25) by at least one screw connection.

5. Crash management system according to any one of claims 1 to 4,
**characterized in that** the crash boxes (25) are welded to the inner flange (14) on the side facing the cross member (10).

6. Crash management system according to one of claims 1 to 5,
**characterized in that** the at least one reinforcing element (35; 35a; 35b) is rectangular, trapezoidal or triangular in shape.

7. Crash management system according to any one of claims 1 to 6,
**characterized in that** the at least one reinforcing element (35; 35a; 35b) extends at least as far as the cross flanges (16, 18) of the cross member (10).

8. Crash management system according to any one of claims 1 to 7,
**characterized in that** the cross member (10) is designed as a multi-chamber profile with at least one partition wall (20) connecting the outer flange (12) to the inner flange (14), and either a reinforcing element (35; 35a; 35b) is provided which extends at least between the two cross flanges (16, 18) of the cross member (10), or **in that** two reinforcing elements (35; 35a; 35b) are provided which each extend between the partition wall (20) and at least the cross flanges (16, 18) of the cross member (10).

9. Crash management system according to any one of claims 1 to 8,
**characterized in that** the inner flange (14) of the cross member (10) is recessed up to an outer edge (38) of the cross member (10) to form the at least one reinforcing element (35; 35b).

10. Crash management system according to claim 9,
**characterized in that** the at least one reinforcing element (35; 35b) has a length (I) which is smaller than the distance from the crash box to the inner flange of the outer edge (38) of the cross member (10).

11. Crash management system according to any one of claims 1 to 8,
**characterized in that** the inner flange (14) of the cross member (10) is recessed at a distance (b) from an outer edge (38) of the cross member (10) to form the at least one reinforcing element (35a), so that a web (40) of the inner flange (14) is formed to the outer edge (38).

12. Crash management system according to one of claims 1 to 11,
**characterized in that** the cross member (10) is made of aluminum or an aluminum alloy and is designed as an extruded component.

13. Crash management system according to any one of claims 1 to 12,
**characterized in that** the crash boxes (25) are made of aluminum or an aluminum alloy.

14. Crash management system according to any one of claims 1 to 13,
**characterized in that** at least two reinforcing elements (35; 35a; 35b) are provided, which are arranged on opposite sides of the crash boxes (25).
